# EUROPÄISCHE PATENTSCHRIFT

(11) **EP 0 658 306 B1**
(45) Veröffentlichungstag und Bekanntmachung des Hinweises auf die Patenterteilung: **17.03.1999**
(21) Anmeldenummer: 94250270.9
(22) Anmeldetag: 09.11.1994
(51) Int. Cl.: A01M 1/20

(54) **Köderdose zur Bekämpfung von Ungeziefer**
Bait box for combating pests
Boîte d'appat pour lutter contre la vermine

(30) Priorität: 14.12.1993 DE 4343538
(43) Veröffentlichungstag der Anmeldung: 21.06.1995
(73) Patentinhaber: frunol-chemie Jürgen Friedel, D-59425 Unna (DE)
(72) Erfinder: Friedel, Jürgen, D-58739 Wickede/Ruhr (DE)
(74) Vertreter: Wablat, Wolfgang, Dr.Dr.

(56) Entgegenhaltungen:
- EP-A- 0 360 960
- DE-A- 2 524 514
- DE-A- 3 212 859
- US-A- 2 026 393

## Beschreibung

Die Erfindung betrifft eine Köderdose zur Bekämpfung von Ungeziefer, die gemäß den Merkmalen des Oberbegriffs des Patentanspruches 1 ausgebildet ist.

Bei einer bekannten Köderdose der gattungsgemäßen Art werden die Ränder der Abdeckung mit den Rändern der äußeren Gehäusewandung des Basisteils verklebt, wobei die äußere Gehäusewandung mit Öffnungen versehen ist, durch die die Insekten über im Basisteil labyrinthisch ausgebildete Wege zum Giftköder gelangen, der in einem inneren Abteil des Basisteils angeordnet ist (DE 3212859 A1). Bei dieser bekannten Köderdose ist es als Nachteil anzusehen, daß die Dose stets von außen zugänglich und für den Fall einer Nichtbenutzung unverschließbar ist. Es gilt zu vermeiden, daß Menschen, insbesondere Kinder oder auch Haustiere mit dem Giftköder in Berührung kommen oder von dem ausströmenden Wirkstoff belästigt werden.

In der DE-A-2524514 wird darüber hinaus eine Köderdose zur Ungezieferbekämpfung mit begifteten Köderstoffen beschrieben, die einen unteren Hohlzylinder mit einer Bodenfläche und einen oberen Hohlzylinder mit einer Deckelfläche umfaßt. Der Zylinder des Basisteils besteht aus einem umlaufenden, teilweise eingeschnittenen Ring mit einer an dessen Außenseite angeformten Wulst, die in eine Nut am Umfang der Innenwand des zweiten Zylinderteils eingreift. Ein sicheres Verrasten und auch eine störungsfreie Führung der Abdeckung auf dem Basisteil, aber auch eine Arretierung der Abdeckung in verschiedenen Drehstellungen auf dem Basisteil ist damit nicht möglich. Außerdem kann der Giftköder bis an die Öffnungen der Köderdose rutschen und ist dadurch in gesundheitsschädigender Wirkung für andere Tiere oder Kinder erreichbar.

Der Erfindung liegt daher die Aufgabe zugrunde, eine zur Bekämpfung von Ungeziefer vorgesehene Köderdose der eingangs erwähnten Art so auszubilden, daß sie leicht und sicher verschließbar ist und nicht leicht auseinandergenommen werden kann und auch sonst für größere Tiere oder Kinder oder nur schwer zugänglich ist.

Erfindungsgemäß wird die Aufgabe mit einer Köderdose zur Bekämpfung von Ungeziefer, bestehend aus einem den Giftköder aufnehmenden Basisteil, das durch einen auf einem Boden angeordneten ersten Hohlzylinder mit in diesem vorgesehenen ersten Öffnungen gebildet ist, und einer als an einer Stirnseite durch ein Haubenteil geschlossener und am Umfang zweite Öffnungen aufweisender zweiter Hohlzylinder ausgeführten Abdeckung, die über das Basisteil steckbar und mit diesem durch Rastelemente verrastbar ist und in dieser Lage zum Freigeben oder Verschließen der ersten Öffnungen axial drehbar ist, in der Weise gelöst, daß der erste Hohlzylinder aus vom Boden des Basisteils ausgehenden, ringförmig und im Abstand angeordneten und jeweils durch eine mit dem Boden verbundene Abstützung zusätzlich gehaltenen Segmentabschnitten mit an deren freien Randbereich angeformten, zum Zylinderinneren vorspringenden Rastelementen gebildet ist, und der zweite Hohlzylinder mit einem von dem Haubenteil der Abdeckung ausgehenden Zylinderteil und in dessen Außenfläche umlaufender Ausnehmung eine ringförmige Rastnut zur Aufnahme der Rastelemente und zur axialen und radialen Führung der Abdeckung bildet.

Durch die so gestaltete Köderdose ist deren Abdeckteil exakt geführt und auf dem Basisteil in verschiedenen Stellungen arretierbar. Eine Demontage ist nur bei geschickter Handhabung, d. h. nicht ohne weiteres durch Kinder möglich. Für größere Tiere ist der Zugang zu den Öffnungen der Köderdose deutlich erschwert. Die Abstützungen der Segmentabschnitte sorgen zum einen für eine stabile Verankerung der Abdeckung und bilden andererseits einen seitlichen Anschlag für den Giftköder, so daß dieser nicht unmittelbar zu den Öffnungen gelangen kann und dessen Berührung durch Kinder oder andere Tiere ausgeschlossen ist. Somit wird eine Köderdose zur Verfügung gestellt, die ein hohes Maß an Sicherheit vor unbefugtem Zugang zum Giftköder bietet.

Weitere Merkmale und vorteilhafte Weiterbildungen der Erfindung ergeben sich aus den Unteransprüchen.

Ein Ausführungsbeispiel der Erfindung ist in der Zeichnung dargestellt und wird im folgenden näher erläutert.

Es zeigen:
- Fig.1: eine perspektivische Darstellung der erfindungsgemäßen Köderdose, wobei die Abdeckung teilweise abgeschnitten ist;
- Fig. 2: eine Schnittdarstellung entlang der Linie A - B gemäß Fig. 1,
- Fig. 3: eine Schnittdarstellung der Abdeckung,
- Fig. 4: eine Draufsicht der Abdeckung C gemäß Fig. 3,
- Fig. 5: einen vergrößerten Ausschnitt X gemäß Fig. 3,
- Fig. 6: eine Schnittdarstellung des Basisteils
- Fig. 7: eine Draufsicht des Basisteils
- Fig. 8: einen vergrößerten Ausschnitt Y gemäß Fig. 6 und
- Fig. 9: eine Draufsicht auf zwei Basisteile als Doppelpack

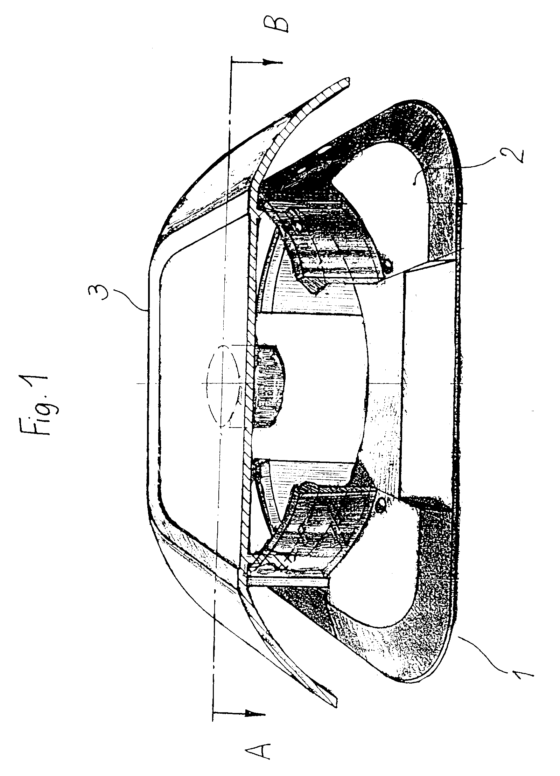

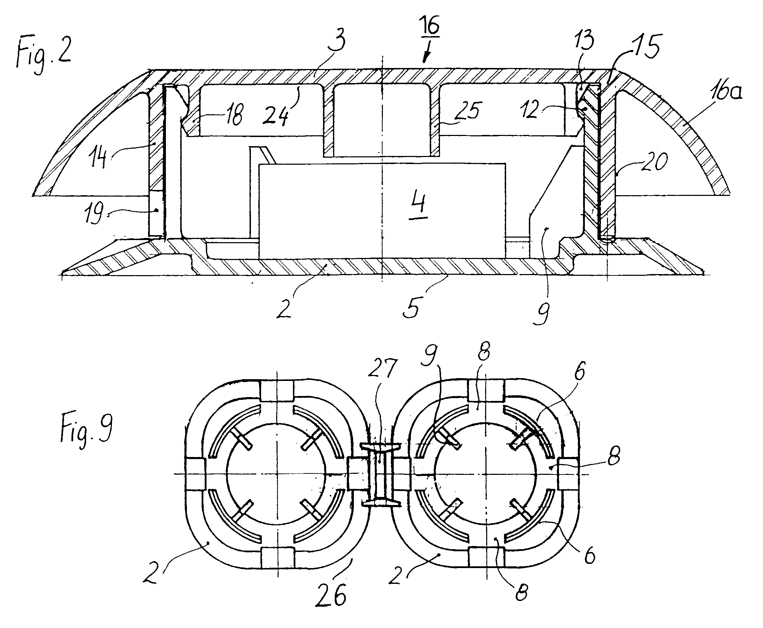

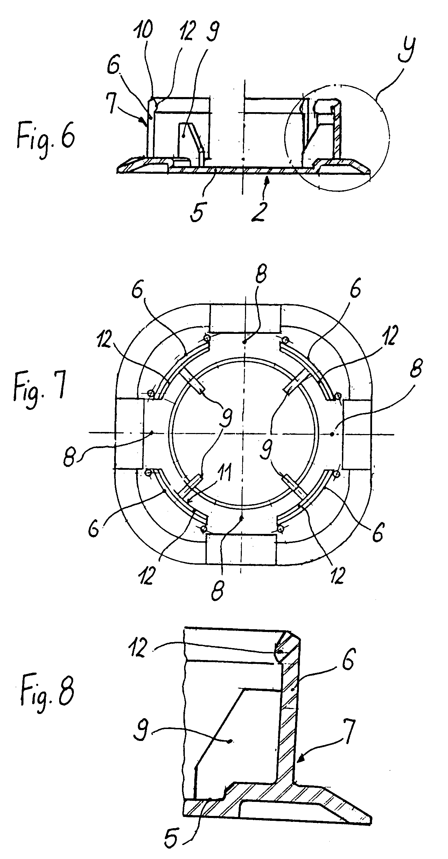

Wie aus den Figuren 1 und 2 ersichtlich ist, besteht die erfindungsgemäße Köderdose 1 im wesentlichen aus einem Basisteil 2 und einer mit diesem verbundenen Abdeckung 3, wobei ein Giftköder 4 zentrisch auf dem Boden 5 des Basisteils 2 angeordnet ist. Auf dem Boden 5 des Basisteils 2 ist mittig ein aus Segmentabschnitten 6 bestehender erster Hohlzylinder 7 angeformt, wobei vorzugsweise vier in einem entsprechenden Abstand zueinander angeordneten Segmentabschnitte vorgesehen sind, um jeweils gegeneinander versetzte Öffnungen für den Ein- und/oder Austritt des Ungeziefers zu bilden (vgl. Fig. 6, 7 und 9). Diese Öffnungen werden derart gestaltet, daß sie nur Tieren bestimmter Größe Zutritt gewähren oder durch die Form und/oder Farbe der Öffnung bestimmte Tiere bevorzugt anlocken. So eignen sich beispielsweise runde Öffnungen entsprechender Dimensionierung für Ameisen, während rechteckige oder quadratische Öffnungen eher von Kakerlaken (Schaben) oder Silberfischchen bevorzugt werden. Die Segmentabschnitte 6 sind jeweils an senkrecht hochstehenden Abstützungen 9 mit einem Boden 5 des Basisteils 2 festgelegt und bilden auf diese Weise mit dem Boden einen stabilen Verbund. Dies ist auch erforderlich, weil die Segmentabschnitte 6 eine Abdeckung 3 tragen und drehbar führen müssen (vgl. Fig. 2) Zu diesem Zweck erstrecken sich jeweils an den oberen Rändern 10 der Segmentabschnitte 6 entlang der kreisförmigen Innenwandung 11 wulstartige Rastelemente 12 (vgl. Fig. 7 und 8), die jeweils in entsprechende Ausnehmungen 13 in der Abdeckung 3 einrasten (vgl. Fig. 2) und auf diese Weise die Abdeckung mit dem Basisteil 2 drehbar verbinden.

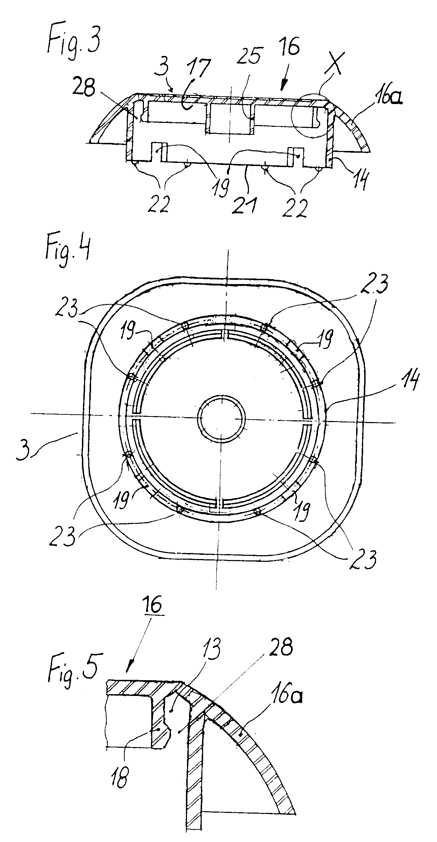

Wie aus den Figuren 3 und 4 ersichtlich ist, besteht die Abdeckung 3 im wesentlichen aus einem zweiten Hohlzylinder 14, der an einer oberen Flächenseite 15 von einem quadratischen Haubenteil 16 abgedeckt wird. An der Innenseite 17 des Haubenteils 16 ist ein Zylinderteil 18 angeformt, das außen die ringsumführende Ausnehmung 13 aufweist, in welche die Rastelemente 12 des Basisteils 2 im zusammengebauten Zustand der Köderdose 1 einrasten und in der Ausnehmung drehbar geführt werden, wenn die Köderdose 1 für den Ein- und/oder Austritt des Ungeziefers geöffnet werden soll. Dabei bildet der zweite Hohlzylinder 14 mit dem Zylinderteil 18 und dessen Ausnehmung 13 eine ringförmige Rastnut 28.

In dem zweiten Hohlzylinder 14 der Abdeckung 3 sind schlitzförmige Öffnungen 19 vorgesehen, die kleinere Abmaße als die Öffnungen 8 des Basisteils 2 aufweisen und die zum Öffnen der Köderdose durch Drehung der Abdeckung 3 mit den Öffnungen 8 in Übereinstimmung gebracht werden. Das Haubenteil 16 weist einen abgewölbten Rand 16a auf, der den Zugang zu den Öffnungen 8 und 19 für größere Tiere oder Kinderhände erschwert.

Für den Fall der Nichtbenutzung der Köderdose 1 soll diese aufgabengemäß sicher verschlossen werden können. Dies erfolgt durch eine Verdrehung der Abdeckung 3 auf dem Basisteil 2 derart, daß die Öffnungen 8 des Basisteils von der Wandung 20 des zweiten Hohlzylinders 14 überdeckt werden. Hierbei erfolgt die Verdrehung der Abdeckung 3 bis in eine festgelegte Position an dem Basisteil 2, indem an der Stirnfläche 21 des zweiten Hohlzylinders 14 ringsum in Abständen voneinander nockenartige Vorsprünge 22 angeformt sind, die in einer bestimmten Endposition in am Basisteil 2 vorgesehenen entsprechenden Vertiefung 23 einrasten und dort sicher verbleiben. Auf diese Weise ist dann die Abdeckung 3 am Basisteil 2 verdrehsicher festgelegt (vgl. Fig. 2, 3, 4 und 7).

An der Innenseite 24 der Abdeckung 3 ist zentrisch ein Zylinderstück 25 angeformt, welches zur Fixierung des Giftköders 4 zwischen der Abdeckung und dem Basisteil 2 dient. Der Giftköder 4 liegt vorzugsweise in Tablettenform vor und kann eine pastenartige oder feste Konsistenz haben. Es kann ein Gemisch eines langsam wirkenden Giftes und gegebenenfalls eines das Ungeziefer anziehenden Futters sein. Die verwendete Art des Giftes und des gegebenenfalls zugesetzten Futters richtet sich nach der Art des zu bekämpfenden Ungeziefers. So wird beispielsweise zur Bekämpfung von Silberfischchen oder Schaben (Kakerlaken) ein langsam wirkendes Gift verwendet, welches die Tiere selbst tötet. Zur Bekämpfung von staatenbildenden Insekten, wie beispielsweise Ameisen, wird dagegen ein Gift mit einem Futter vermischt, welches diese Insekten anzieht, die dieses Futter an ihre Ameisenkönigin weitergeben. Durch den Tod der Ameisenkönigin wird die Gründung eines neuen Ameisenstaates verhindert.

In einer weiteren vorteilhaften Ausführung kann die Köderdose als ein sogenannter Doppelpack 26 ausgeführt werden, in dem jeweils die beiden Basisteile 2 an einer Verbindungsstelle 27 zusammengefügt sind und somit zwei Köderdosen 1 in einem Stück darstellen (vgl. Fig. 9). Die Köderdose 1 ist vorteilhaft als Spritzgußteil ausgeführt.

Ferner läßt sich durch entsprechende Farbgebung der gesamten, beispielsweise aus Spritzguß gefertigten Köcherdose die Attraktivität für bestimmtes Ungeziefer steigern. Die Farbgebung trägt aber auch zur Sicherheit bei, da Verwechslungen durch den Verwender vermieden werden können und auch solche Farben gewählt werden können, die beispielsweise nicht die Neugier spielender Kinder oder auch die der Haustiere erweckt.

### Bezugzeichenliste

- 1: Köderdose
- 2: Basisteil
- 3: Abdeckung
- 4: Giftköder
- 5: Boden des Basisteils
- 6: Segmentabschnitte
- 7: erster Hohlzylinder
- 8: Öffnung
- 9: Abstützung
- 10: oberer Rand der Segmentabschnitte
- 11: kreisförmige Innenwandung
- 12: Rastelement
- 13: Ausnehmung
- 14: zweiter Hohlzylinder
- 15: obere Flächenseite
- 16: Haubenteil, 16a abgewölbter Rand
- 17: Innenseite des Haubenteils 16
- 18: Zylinderteil
- 19: schlitzförmige Öffnungen
- 20: Wandung
- 21: Stirnfläche
- 22: nockenartige Vorsprünge
- 23: Vertiefungen
- 24: Innenseite der Abdeckung 3
- 25: Zylinderstück
- 26: Doppelpack
- 27: Verbindungsstelle
- 28: Rastnut

## Patentansprüche

1. Köderdose zur Bekämpfung von Ungeziefer, bestehend aus einem den Giftköder (4) aufnehmenden Basisteil (2), das durch einen auf einem Boden (5) angeordneten ersten Hohlzylinder (7) mit in diesem vorgesehenen ersten Öffnungen (8) gebildet ist, und einer als an einer Stirnseite durch ein Haubenteil (16) geschlossener und am Umfang zweite Öffnungen (19) aufweisender zweiter Hohlzylinder (14) ausgeführten Abdeckung (3), die über das Basisteil (2) steckbar und mit diesem durch Rastelemente verrastbar ist und in dieser Lage zum Freigeben oder Verschließen der ersten Öffnungen (8) axial drehbar ist, dadurch gekennzeichnet, daß der erste Hohlzylinder (7) aus vom Boden (5) des Basisteils (2) ausgehenden, ringförmig und im Abstand angeordneten und jeweils durch eine mit dem Boden (5) verbundene Abstützung (9) zusätzlich gehaltenen Segmentabschnitten (6) mit an deren freiem Randbereich angeformten, zum Zylinderinneren vorspringenden Rastelementen (12) gebildet ist, und der zweite Hohlzylinder (14) mit einem von dem Haubenteil (16) der Abdeckung (3) ausgehenden Zylinderteil (18) und in dessen Außenfläche umlaufender Ausnehmung (13) eine ringförmige Rastnut (28) zur Aufnahme der Rastelemente (12) und zur axialen und radialen Führung der Abdeckung (3) bildet.

2. Köderdose nach Anspruch 1, dadurch gekennzeichnet, daß an der Stirnfläche (21) des zweiten Hohlzylinders (14) nockenartige Vorsprünge (22) angeordnet sind, die in einer vorbestimmten Endposition in am Basisteil (2) vorgesehenen und entsprechend geformten Vertiefungen (23) verrastbar sind.

3. Köderdose nach Anspruch 1, dadurch gekennzeichnet, daß an der Innenseite des Haubenteils (16) zentrisch ein Zylinderstück (25) angeordnet ist, das zur Fixierung des Giftköders (4) zwischen der Abdeckung (3) und dem Basisteil (2) dient.

4. Köderdose nach Anspruch 1, dadurch gekennzeichnet, daß das Haubenteil (16) einen seitlich über den zweiten Zylinder (14) abgewölbten Rand (16a) aufweist und eine quadratische Grundfläche hat.

5. Köderdose nach Anspruch 1, dadurch gekennzeichnet, daß zwei Basisteile (2) mit Abdeckungen (3) vorgesehen sind und an einer Verbindungsstelle (27) zu einem Doppelpack (26) zusammengefügt sind.

## Claims

1. A bait box for pest control consisting of a base component (2) holding the attractant poison (4) that is formed by a first hollow cylinder (7) with first holes (8) in it and placed on a bottom (5), and a cover (3) formed by a second hollow cylinder (14) closed at one end face by a cap part (16) and comprising second holes (19) at its perimeter, said cover being placeable atop said base part (2) and lockable to it by means of latching elements and pivotable in said position in axial direction for opening or closing said first holes (8), characterized in that said first hollow cylinder (7) is formed by segmental parts (6) starting from said bottom (5) of said base part (2), arranged in annular shape at a spacing, each held by an extra support (9) connected to said bottom (5), and each comprising latching elements (12) integrally mounted to its free edges and projecting towards the inside of the cylinder, and in that said second hollow cylinder (14) forms an annular snap-in groove (28) for receiving said latching elements (12) and for radial guidance of said cover (3) with a cylinder part (18) starting from said cap part (16) of said cover (3) and a recess (13) in and around its outer surface.

2. The bait box according to claim 1, characterized in that the end face (21) of said second hollow cylinder (14) has cam-like projections (22) that can be snapped into a predefined end position into accordingly shaped recesses (23) provided at said base part (2).

3. The bait box according to claim 1, characterized in that a cylindrical piece (25) is provided centrally on the inside of said cap part (16) that holds the attractant poison (4) between said cover (3) and said base part (2).

4. The bait box according to claim 1, characterized in that said cap part (16) comprises an edge (16a) curving sidewards over said second cylinder (14) and has a square base.

5. The bait box according to claim 1, characterized in that two base parts (2) and covers (3) are provided that are assembled at a joint (27) to form a double pack (26).

## Revendications

1. Boite d'appât pour lutter contre la vermine, constituée d'une pièce de base (2) qui reçoit l'appât empoisonné (4) et qui est constituée par un premier cylindre creux (7) disposé sur un fond (5) et muni de premières ouvertures (8), et d'un couvercle (3) constitué par un second cylindre creux (14) fermé à une extrémité par un chapeau (16) et comportant sur son pourtour des secondes ouvertures (19), ce couvercle pouvant s'emmancher par-dessus la pièce de base (2) et s'encliqueter sur celle-ci au moyen d'éléments d'encliquetage et, dans cette position, pouvant tourner autour de son axe pour libérer ou obturer les premières ouvertures (8), caractérisée en ce que le premier cylindre creux (7) est constitué de sections (6) en forme de segments qui partent du fond (5) de la pièce de base (2), sont disposés suivant un anneau et à distance les uns des autres et sont maintenus en outre par des contreforts respectifs (9) reliés au fond (5), les sections (6) ayant, dans la région de leur bord libre, des éléments d'encliquetage (12) en saillie vers l'intérieur du cylindre, et en ce que le second cylindre creux (14) forme, avec une partie cylindrique (18) qui part du chapeau (16) du couvercle (3) et un évidement circulaire (13) ménagé dans sa surface extérieure, une gorge annulaire d'encliquetage (28) destinée à recevoir les éléments d'encliquetage (12) et à guider axialement et radialement le couvercle (3).

2. Boîte d'appât suivant la revendication 1, caractérisée en ce que des saillies (22) en forme de bossages sont prévues sur la tranche d'extrémité (21) du deuxième cylindre creux (14), ces saillies pouvant s'encliqueter, dans une position extrême prédéterminée, dans des évidements (23) prévus dans la pièce de base (2) et conformés de façon correspondante.

3. Boîte d'appât suivant la revendication 1, caractérisée en ce qu'une pièce cylindrique (23) est prévue sur le côté intérieur du chapeau (16), en position centrée, et sert à la fixation de l'appât empoisonné (4) entre le couvercle (3) et la pièce de base (2).

4. Boîte d'appât suivant la revendication 1, caractérisée en ce que le chapeau (16) comporte un bord (16a) incurvé en voûte latéralement au-delà du second cylindre (14) et possède une surface de base carrée.

5. Boîte d'appât suivant la revendication 1, caractérisée en ce qu'il est prévu deux pièces de base (2) avec des couvercles (3), rassemblées en un paquet double (26) en un emplacement de liaison (27).
